# FASCICULE DE BREVET EUROPEEN

(11) **EP 2 406 012 B1**
(45) Date de publication et mention de la délivrance du brevet: **01.05.2013**
(21) Numéro de dépôt: 10714933.8
(22) Date de dépôt: 09.03.2010
(51) Int. Cl.: F01D 15/00, F02C 6/06, F02K 3/04, B05B 7/00, F23G 7/08

(54) **DISPOSITIF DE PROJECTION DE FLUIDE PAR EFFET DE SOUFFLE D'AIR**
VORRICHTUNG ZUM SPRÜHEN EINER FLÜSSIGKEIT MITTELS DRUCKLUFTWIRKUNG
DEVICE FOR SPRAYING A FLUID USING THE AIR BLAST EFFECT

(30) Priorité: 13.03.2009 FR 0901164
(43) Date de publication de la demande: 18.01.2012
(73) Titulaire: Price Induction, 64600 Anglet (FR)
(72) Inventeur: ETCHEPARRE, Bernard, F-64600 Anglet (FR)
(74) Mandataire: Novagraaf Technologies
(86) Numéro de dépôt international: PCT/FR2010/050401
(87) Numéro de publication internationale: WO 2010/103229

(56) Documents cités:
- EP-A1- 1 710 500
- EP-A2- 1 798 475
- FR-A1- 2 703 264
- FR-A5- 2 068 030
- US-A- 3 528 250
- US-A- 3 917 173
- US-A- 4 030 244

## Description

### Domaine Technique de l'invention :

La présente invention concerne un dispositif destiné à améliorer la capacité de projection de fluides divers et en particulier d'eau, par effet de souffle d'air, pour des applications destinées principalement au domaine de la protection civile, mais aussi de la protection de l'environnement et de l'agriculture.

Le besoin de projeter des fluides divers et en particulier de l'eau, en quantité plus ou moins grande, en gouttelettes plus ou moins fines à des distances plus ou moins importantes, en utilisant le souffle d'une colonne d'air, se retrouve dans différentes applications. En particulier dans des applications de lutte contre l'incendie par effet de la brumisation à la fois pour éteindre le feu mais aussi pour protéger ou refroidir, dans des applications de protection de l'environnement pour des actions de protection ou de décontamination ou tout simplement dans des applications agricoles pour de l'arrosage ou l'épandage de produits phytosanitaires.

### Etat de la technique antérieure faisant ressortir le problème technique posé :

Les documents US 39 17 173, FR 27 03 264, US 4030244 ou FR 2068030 décrivent des dispositifs de projection de fluide. Le document US 3528250 décrit une turbine comprenant des buses de piquage et des bruleurs disposés dans la veine aérodynamique secondaire.

Dans tous les cas, la technique repose d'abord, sur l'idée de pulvériser le fluide à travers un ou des injecteurs disposés généralement en couronne et placés en périphérie et dans le flux d'air créé par un ventilateur plus ou moins puissant, de telle sorte que les gouttelettes qui en résultent soient suffisamment fines pour se mélanger au souffle d'air qui les porte.

Pour pulvériser le fluide en plus ou moins fines gouttelettes, les techniques généralement employées sont des techniques hydromécaniques et pour créer le souffle d'air, le principe généralement employé, est celui des ventilateurs carénés qui créent des débits d'air plus ou moins importants dans des conditions de très faible pression.

La technique de pulvérisation du fluide, généralement retenue, repose principalement sur l'effet de fractionnement mécanique qui se crée au niveau du gicleur par l'effet de la pression que l'on exerce en entrée du gicleur sur le fluide et qui dépend aussi de la géométrie du trou de passage. Plus le débit est important et plus il faut un effort conséquent pour assurer le passage. Cela se traduit par des besoins en puissance de motorisation des pompes et des difficultés de garantir le bon fonctionnement à des pressions importantes pour des débits conséquents.

La technique de mélange de l'air et du fluide est généralement des plus triviales et consiste à répartir le mieux possible les injecteurs de pulvérisation du fluide en périphérie de la carène dans le flux d'air éjecté de telle sorte à harmoniser le débit de fluide éjecté et laisser principalement ce flux d'air assurer cette fonction de mélange.

La présente invention a pour objectifs :
Premièrement, d'améliorer les conditions de pulvérisation de telle sorte à obtenir un fractionnement du fluide en gouttelettes suffisamment fines avec un moindre besoin de puissance hydraulique.
Deuxièmement, de parvenir à créer un pré-mélange air/fluide qui tende à favoriser un mélange final beaucoup plus intime avec la colonne d'air qui transporte le fluide.

### Exposé de l'invention permettant la compréhension de la solution technique apportée au problème technique posé :

Le dispositif, selon l'invention, permet de répondre aux différents objectifs recherchés qui apportent à l'état actuel de la technique de projection des fluides par effet de souffle d'air, une amélioration conséquente.

A cet effet, il est prévu un générateur de flux d'air comprimé de haut débit, alimenté par de l'air ambiant et comprenant une soufflante entrainée par un moteur ou un turbomoteur intégré dans un corps central alimenté en air comprimé primaire, et un carénage créant une veine aérodynamique d'air comprimé secondaire autour du corps central.

On prévoit au moins une buse de piquage d'air comprimé raccordée à la veine d'air secondaire.

Et on conseille que l'alimentation en fluide à projeter soit reliée à une source d'un fluide destiné à la protection civile, à la protection ou la décontamination de l'environnement, ou à l'agriculture. Un fluide pour l'agriculture sera un fluide utile à ce domaine, tel de type engrais, désherbant, phytosanitaire.

Un moteur comprenant une veine d'air secondaire autour d'une veine d'air primaire et pourvu d'un tel dispositif de projection de fluide est également concerné.

L'est également un réacteur double flux alimenté par de l'air ambiant et comprenant une veine d'air secondaire comprimé située autour d'un corps central alimenté en air comprimé primaire et une soufflante entrainée par un moteur ou un turbomoteur intégré dans ledit corps central, ce réacteur étant équipé d'un dispositif de projection d'un fluide à projeter par effet de souffle d'air, ce dispositif étant lui-même pourvu d'une ou plusieurs chambres de pré-mélange comprenant une buse de piquage d'air comprimé raccordée à ladite veine d'air secondaire et alimentée avec ledit fluide à projeter de manière à pulvériser et pré-mélanger ce fluide avec l'air comprimé piqué, avant de diffuser le mélange à l'extérieur, à travers des cônes d'éjection, par l'effet du souffle d'air créé.

Est aussi concerné un procédé pour projeter un fluide, dans lequel:
- on va créer le souffle d'air par un réacteur double flux,
- et on va piquer dans sa veine d'air secondaire de l'air comprimé pour alimenter une ou plusieurs chambres de pré-mélange alimentée(s) en outre avec ledit fluide à projeter, de manière à pulvériser ce fluide avec l'air comprimé piqué, avant de diffuser ledit mélange à l'extérieur.

Favorablement, et comme illustré, le générateur de flux d'air basse pression alimenté par l'air ambiant 6, qui a pour fonction la création d'un souffle d'air comprimé de haut débit dans une veine aérodynamique, comprendra la soufflante 1 tournant à haut régime par l'effet du moteur ou turbomoteur 17 intégré dans le corps central 2 et associée à des redresseurs de flux fixes ou mobiles 3 qui sont destinés à assurer une évacuation du flux d'air sans giration et un carénage périphérique extérieur 4 créant une veine aérodynamique 5 par rapport au corps central 2.

On conseille que ce générateur de flux d'air soit dimensionné de telle sorte qu'en fonctionnement nominal, la pression de l'air en sortie de la veine 5 d'air secondaire sous pression, créé par la rotation de la soufflante, soit au moins supérieure de 15 % à la pression d'entrée en 6 (qui est la pression atmosphérique de l'air dans les conditions de fonctionnement).

En particulier sur un tel générateur de flux d'air, l'invention propose de monter un dispositif 20 de projection de fluide par effet du souffle gazeux créé.

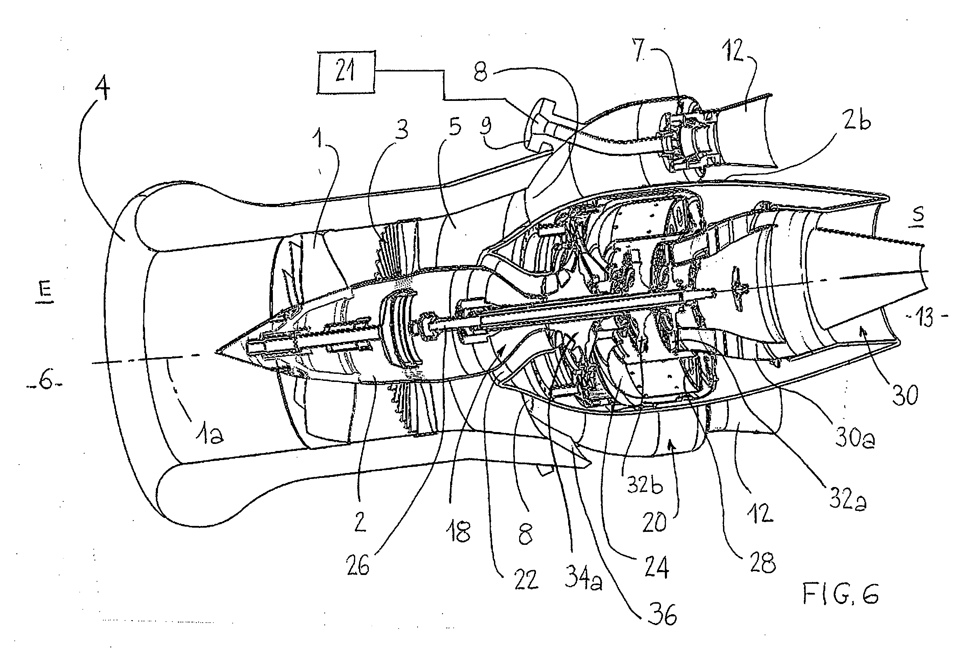

Comme illustré fig.6, l'alimentation 9 en fluide à projeter sera reliée à une source 21 d'un fluide destiné à la protection civile, à la protection ou la décontamination de l'environnement, ou à l'agriculture. Pour projeter ce fluide, le dispositif 20 comprend au moins une buse 8 de piquage d'air comprimé raccordée à la veine d'air secondaire 5 du générateur de flux d'air.

Ainsi, une ou plusieurs chambres de pré-mélange 7 vont être disposées vers la sortie de la veine aérodynamique avec pour fonction d'assurer la pulvérisation et le pré-mélange air/fluide. Chaque chambre, est alimentée en air comprimé par piquage (en 8) du flux à l'aide d'une buse placée dans et vers la sortie de la veine aérodynamique 5.

On recommande que la/chaque chambre soit en surpression par rapport à l'air extérieur ambiant d'au moins 15 %, en fonctionnement nominal.

Chaque chambre, selon une autre caractéristique, est alimentée en fluide par un conduit 9 au bout duquel est fixé un gicleur faisant restriction (10) qui débouche dans un tourbilloneur aérodynamique (Swirler) 11 destiné à compléter la pulvérisation du fluide et à assurer le mélange de l'air de piquage au fluide pulvérisé par le gicleur de telle sorte que le mélange s'éjecte par un cône 12 qui débouche à l'air libre dans le souffle d'air 13.

On connaît les propriétés des tourbilloneurs aérodynamiques (Swirler) 11 qui ont pour fonction de compléter la pulvérisation du fluide assurée en premier lieu hydro-mécaniquement par le gicleur 10 du fait de la pression qui est appliquée au fluide dans le conduit 9.

Le principe de fonctionnement repose sur l'effet de l'air comprimé contenu dans la chambre 7 qui est piqué par une buse dans la veine aérodynamique 8 et qui s'évacue vers l'extérieur en passant par deux conduits annulaires à fentes orientées 14 et 15. Le premier faisant tourner une partie de l'air dans un sens autour du fluide pulvérisé et le second faisant tourner le reste de l'air dans l'autre sens autour d'un venturi 16. Les masses d'air mises en mouvement contraire, autour du fluide pulvérisé par le gicleur, ont deux effets conjugués : un effet de cisaillement qui casse encore plus les gouttelettes et les affine et un effet aérodynamique qui réalise dans le cône d'éjection (12) un pré-mélange air/fluide qui va favoriser encore plus le mélange final.

Comme les chambres de pré-mélange sont alimentées par des buses qui font un piquage d'air vers la sortie de la veine aérodynamique, une des caractéristiques selon l'invention est de faire en sorte que le générateur de flux d'air dans la veine aérodynamique assure une pression performante, qui doit favorablement être au moins de 15% supérieure à la pression extérieure de l'air ambiant en fonctionnement nominal.

Du fait du montage décrit, une caractéristique selon l'invention, est celle de pouvoir obtenir, à une pression donnée de la veine aérodynamique, des gouttelettes plus fines que celles obtenues habituellement dans un montage traditionnel avec la pression du fluide généralement appliquée ou inversement dans les mêmes conditions de pression de la veine aérodynamique, d'obtenir la taille des gouttelettes habituelles avec un fluide à pression bien plus basse que la pression généralement appliquée donc exigeant moins de puissance hydraulique pour y parvenir.

Une autre caractéristique, selon l'invention, est de favoriser le mélange final d'une manière importante permettant ainsi à l'effet de souffle de porter plus intimement et plus loin les gouttelettes de fluide.

### Brève présentation des figures :

Les dessins annexés illustrent l'invention :

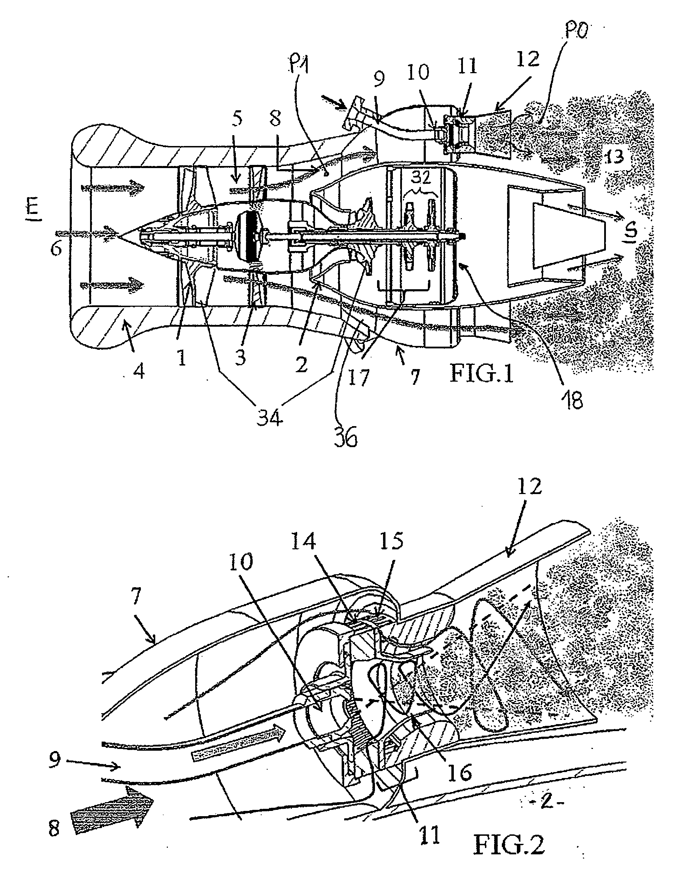

La figure 1, représente en coupe et à plat, le montage complet du dispositif selon l'invention. On y trouve les éléments essentiels que sont : le corps central 2, la soufflante (ou compresseur basse pression) 1, les redresseurs de flux 3, le carénage 4, la veine aérodynamique 5, une chambre de pré-mélange 7 avec sa buse d'entrée d'air de piquage 8 et son cône d'éjection 12.
La figure 2, représente en coupe et dans l'espace et en détail le dispositif d'un injecteur aérodynamique avec son gicleur et son tourbilloneur (Swirler) placés dans une chambre de pré-mélange, 7. Cette figure détaille et permet d'illustrer le principe de cisaillement et de mélange, que provoque le mouvement de l'air comprimé qui s'échappe à l'air libre, autour de la pulvérisation du fluide créée par le gicleur.

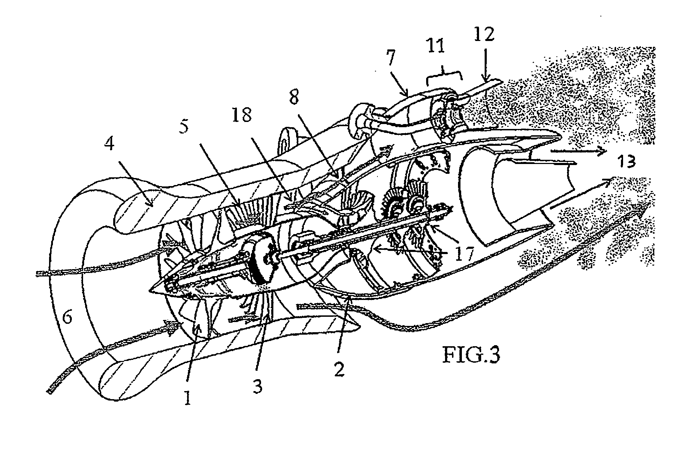

La figure 3, représente en coupe et dans l'espace un mode de réalisation à partir d'un réacteur double flux. La veine secondaire d'un réacteur double flux représente la veine idéale en surpression pour installer en sortie, les chambres de pré-mélange équipées de leurs cônes qui piquent une partie du flux de la veine secondaire et éjectent le fluide pulvérisé et pré-mélangé dans le souffle résultant du flux principal de la veine secondaire.

### Exposé détaillé d'au moins un mode de réalisation de l'invention :

La difficulté de réalisation du dispositif, selon l'invention, réside surtout dans la capacité d'assurer dans la veine aérodynamique, une pression suffisante et une bonne directivité d'un flux d'air de grand débit, pour le bon fonctionnement des chambres de pré-mélange qui sont alimentées en air comprimé par piquage en sortie de la veine.

Dans un mode de réalisation selon la figure 3, le générateur d'air basse pression reprend l'architecture traditionnelle d'un réacteur double flux et est constitué d'un corps central 2 qui supporte une carène 4 créant ainsi une veine aérodynamique soigneusement dessinée et dimensionnée dans le respect des règles Aérodynamiques 5. Dans le corps central, en partie arrière 17 est installé un turbomoteur. Ce turbomoteur est relié par les dispositifs mécaniques à une soufflante 1 placée en partie avant du corps central, qui comporte des aubes de forme aérodynamique adaptée et qui tourne à grande vitesse dans l'axe général de l'ensemble. Le souffle d'air créé par la rotation de la soufflante est appelé flux principal. Du fait des lois Thermodynamiques, le flux principal en sortie de la soufflante est porté à une pression plus grande que la pression d'entrée d'air 6, qui est à la pression atmosphérique, d'au minimum 15 % et subit une élévation de température de quelques dizaines de degrés par rapport à la température d'entrée.

En aval de la soufflante et à une distance adaptée, est disposée une grille de lamelles fixes ou mobiles dans la veine principale 3, ces lamelles ont des profils aérodynamiques soigneusement adaptés et ont une fonction de redresseur de flux. Le flux principal en sortie de la soufflante a en effet, un mouvement de giration dans l'axe de la veine qu'il convient de contrecarrer. La grille des redresseurs fait l'effet de ramener le flux principal dans l'axe de la veine, assurant ainsi un souffle d'air directif et laminaire, sans trop nuire à la pression ni à la vitesse générale du flux principal produit par la soufflante.

En aval des redresseurs est disposée, dans le corps central, une entrée d'air annulaire qui prélève une part du flux d'air principal pour alimenter le fonctionnement du Turbomoteur 18, l'air qui est dirigé dans cette entrée d'air est appelé air primaire . L'air restant est dirigé vers l'éjection et est appelé air secondaire et la veine qui le conduit est dite veine secondaire, il représente en général 40 à 80% du flux principal et est éjecté à des vitesses de l'ordre de 150 à 250 m/s.

Les conditions qui s'établissent dans la veine secondaire, au régime nominal, en termes, de pression totale du flux, de température et de directivité, sont celles qui conviennent au bon fonctionnement des chambres de pré-mélange. Dans le mode de réalisation, selon l'invention, on dispose les buses de piquage des chambres de pré-mélange, dans le flux secondaire au droit et en sortie de veine 8, de telle sorte qu'elles ne gênent pas l'éjection du flux secondaire résiduel, qui peut représenter jusqu'à 80% du total du flux secondaire et qui constitue une fois éjecté à l'air libre le souffle d'air qui dilue et diffuse les gouttelettes de fluide.

En conséquence, dans le mode de réalisation selon l'invention, on s'attachera à disposer les cônes d'éjection des chambres de pré-mélange 12 dans le flux secondaire résiduel.

Enfin, les gaz d'échappement du turbomoteur seront éjectés par une tuyère située en partie arrière du corps central, concentrique et au coeur du flux secondaire résiduel 19. L'expérience montre que ces gaz perdent très vite de leur vitesse et surtout de leur température et s'ils ne représentent que moins de 30% de la masse d'air éjectée, ils ne nuiront pas significativement à la diffusion des gouttelettes portées par le souffle d'air mais favoriseront par contre la vitesse générale du souffle d'air et amélioreront la distance de portée.

Le dispositif, selon l'invention, est particulièrement destiné aux applications du domaine de la protection civile, mais aussi de la protection de l'environnement et de l'agriculture.

Comme on l'a compris une partie notable de l'invention repose :
- sur la disposition des chambres de mélange 7/12 en sortie de la veine secondaire 5/8 d'un réacteur double flux,
- et sur l'utilisation de la différence de pression entre la pression de piquage (P1 figure 1) et la pression ambiante (P0 figure 1 et qui est celle de l'air extérieur en sortie de l'embout 12) pour réaliser un prémélange du fluide 20 que l'on veut projeter avec une partie de l'air secondaire piqué via la/les buse(s) 8.

Pour cela, les tourbillonneurs 11 (ou swirlers) placés en entrée de la chambre de mélange 7/12 permettent de cisailler le fluide projeté afin de créer des gouttes très fines de fluide à projeter et de réaliser un mélange intime entre ce fluide et l'air, avant de projeter ce mélange dans le flux d'air principal 13.

Ainsi, on va injecter le fluide à projeter (eau par exemple) en deux temps : le premier temps assure un cisaillement fin des gouttes et leur mélange intime à l'air de piquage, ce qui a pour effet, dans un second temps, de rendre particulièrement efficace la répartition de ces gouttes en mélange intime avec l'air dans le flux principal.

De cette manière, en particulier dans les applications de lutte incendie, on va pouvoir réduire fortement la taille des gouttes pulvérisée. Plus les gouttes sont fines plus l'efficacité d'extinction d'un foyer est grand (inertage).

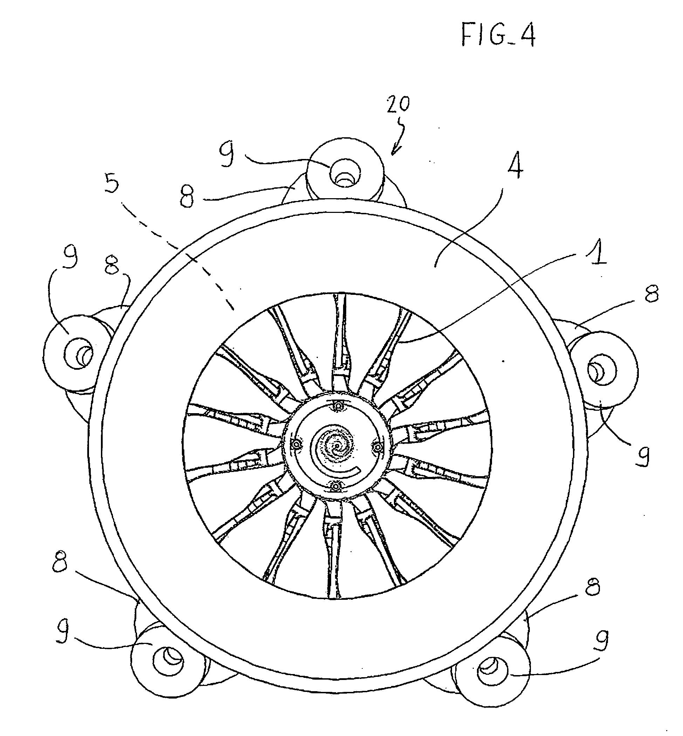

Figures 3,4 on voit que plusieurs buses 8 de piquage d'air secondaire sont favorablement réparties circonférentiellement dans la veine annulaire d'air secondaire comprimé 5.

Ainsi, on pourra accorder à la veine périphérique d'air secondaire 5 plusieurs dispositifs de projection de fluide, ici tous repérés 20.

Un seul étage, suivant donc une seule couronne sera a priori suffisant ; voir figures 3 et 4.

En outre, l'alimentation 9 de la/chaque buse 8 de piquage est raccordée à une source 21 de fluide à projeter.

Une source commune est possible. On a compris que la source 21 contiendra une quantité appropriée de fluide destiné à la protection civile, à la protection ou la décontamination de l'environnement, ou à l'agriculture.

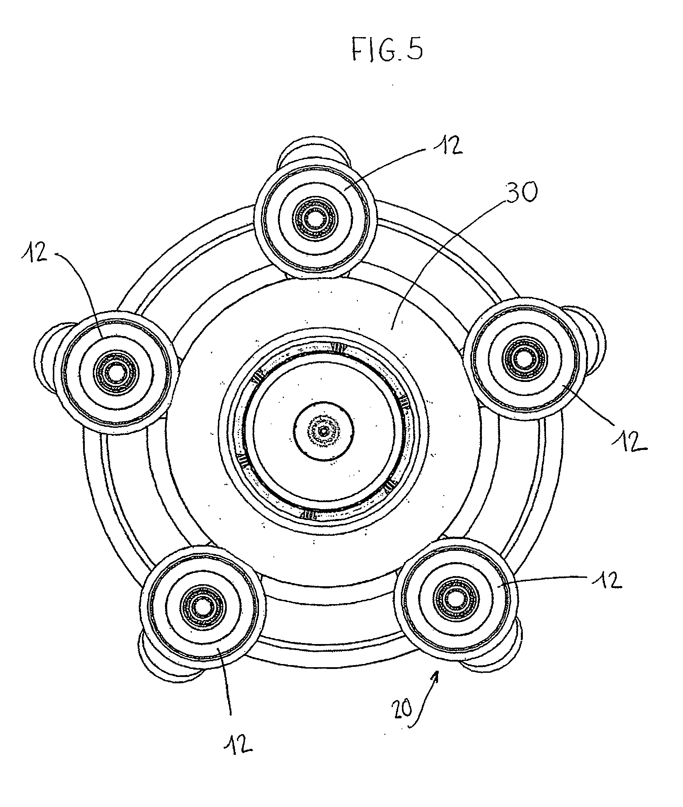

Entre trois et sept dispositifs de projection 20 seront favorablement disposés autour du carénage 4 (une situation à cinq tels dispositifs angulairement repartis de façon régulière est montrée figures 4 et 5).

Quant à l'intérieur du corps central 2, notamment la figure 6 permet de montrer qu'il comprend les moyens typiquement utiles au fonctionnement du moteur ou turbomoteur 18 à soufflante.

D'abord, ce corps central est intérieurement alimenté en air comprimé par piquage en 22 pour canaliser un flux d'air primaire vers la zone centrale annulaire de combustion 24.

Plusieurs piquages 22 sont prévus, en aval des redresseurs 3, en prise dans la veine 5.

Dans le corps central 2, on voit notamment, autour de l'arbre moteur 26, les arrivées de carburant 28.

Ces arrivées apportent vers les injecteurs le carburant qui, avec l'air carburant primaire, va permettre d'enflammer le mélange créé, dans la zone de combustion 24.

Les gaz brûlés sont évacués en aval, par la tuyère centrale 30. Ils participent à créer le flux gazeux 13.

L'arbre-moteur central 26 relie la soufflante tournante 1, située en amont, à la partie turbine 32, située plus en aval (toujours en relation avec le sens global d'écoulement de l'air entre l'entrée E et la sortie S) avec, entre les deux, la partie 34 compresseur d'air située en amont de la zone de combustion.

Les parties 32,34 comprennent plusieurs étages respectivement de turbines et de compresseurs.

Typiquement, on trouvera des étages de turbines et de compresseur respectivement haute pression (32a, 34a) et basse pression 32b, 1.

Figure 6 notamment, on a repéré 36 la sortie annulaire du flux d'air secondaire, c'est-à-dire l'extrémité arrière du carénage 4.

On constate que, le long de l'axe central la, de cette machine 1, tant le corps central 2 que les chambres de pré-mélange 7 et leurs tuyères ou cônes 12 s'étendent jusqu'en aval de la sortie 36, donc plus loin derrière. Toutefois, ces cônes 12 seront situés favorablement autour de la partie amont 30a de la tuyère 30, donc autour de la partie arrière ventrue 2b de la cloison périphérique du corps central 2.

Sur différentes figures, on aura également remarqué que le dispositif de projection de fluide 20 comprend un ou plusieurs satellites. Chacun d'eux renferme la ou les dites chambres de pré-mélange 7 et est disposé autour du carénage 4 de la veine 5 d'air secondaire.

Bien entendu, chaque chambre de pré-mélange 7 se poursuit à l'arrière par le diffuseur 12.

Compte tenu de ce qui précède, on aura en outre compris que l'invention est également caractéristique en ce qu'elle concerne un procédé pour projeter un fluide, dans lequel on-mélange ce fluide avec de l'air comprimé, avant de diffuser le mélange par l'effet du souffle d'air créé, avec pour particularités que :
- on crée le souffle d'air par un réacteur double flux alimenté par de l'air ambiant 6 et comprenant une veine 5 d'air secondaire comprimé,
- on pique dans ladite veine d'air secondaire 5 de l'air comprimé pour alimenter une ou plusieurs chambres de pré-mélange 7 alimentée(s) en outre avec ledit fluide à projeter 9 de manière à pulvériser ce fluide avec l'air comprimé piqué, avant de diffuser ledit mélange à l'extérieur.

Précisément, on aura de préférence piqué l'air comprimé dans ladite veine d'air secondaire 5 et alimenté le dispositif en fluide à projeter 9 en disposant donc la ou les dites chambres de pré-mélange 7 en satellite(s) autour du carénage 4.

Et on rappellera que le dispositif, selon l'invention, trouvera son utilité, en particulier, dans des applications de lutte contre l'incendie à la fois pour éteindre le feu mais aussi pour protéger ou refroidir, dans des applications de protection de l'environnement pour des actions de protection ou de décontamination ou tout simplement dans des applications agricoles pour de l'arrosage ou l'épandage de produits phytosanitaires.

## Revendications

1. Dispositif de projection de fluide par effet de souffle d'air disposé sur un générateur de flux d'air comprimé de haut débit, alimenté par de l'air ambiant (6) et comprenant :
- une soufflante (1) entrainée par un moteur ou un turbomoteur (17) intégré dans un corps central (2) alimenté en air comprimé primaire,
- des redresseurs de flux fixes ou mobiles (3) placés en aval de la soufflante,
- un carénage (4) créant une veine aérodynamique (5) d'air comprimé secondaire autour du corps central (2),
- une ou plusieurs chambres de pré-mélange (7) recevant le fluide à projeter, par une alimentation (9) en fluide, pulvérisant et pré-mélangeant ce fluide avant de le diffuser à travers des cônes (12) par effet de souffle d'air,
- au moins une buse (8) de piquage d'air comprimé raccordée à la veine d'air secondaire (5),
**caractérisé en ce qu'**il comprend en outre plusieurs satellites renfermant chacun une dite chambre de pré-mélange (7) et disposés autour du carénage (4) de la veine (5) d'air secondaire.

2. Dispositif, selon la revendication 1, **caractérisé par le fait que** l'alimentation (9) en fluide à projeter est reliée à une source (21) d'un fluide destiné à la protection civile, à la protection ou la décontamination de l'environnement, ou à l'agriculture.

3. Dispositif, selon la revendication 1 ou 2, **caractérisé par le fait que** le dispositif de projection de fluide et le générateur de flux d'air sont dessinés et dimensionnés de telle sorte que le flux d'air comprimé secondaire, créé dans la veine aérodynamique (5) par la rotation de la soufflante, soit en surpression par rapport à l'air extérieur ambiant d'au moins 15% en fonctionnement nominal.

4. Dispositif, selon les revendications 1 et 3 ou 2 et 3, **caractérisé par le fait qu'**il comprend plusieurs buses de piquage d'air (8) disposées dans le flux de la veine aérodynamique (5) d'air comprimé secondaire, en sortie de cette veine, de telle sorte que la ou les chambres de pré-mélange (7) soi(en)t alimentée(s) en air comprimé secondaire à une pression au moins supérieure à 15% de celle de l'air extérieur ambiant.

5. Dispositif, selon la revendication 1 ou 2, **caractérisé par le fait que** chaque chambre de pré-mélange (7) est équipée d'un conduit d'alimentation du fluide à projeter (9) dont l'orifice d'évacuation porte un gicleur (10), lequel débouche dans un tourbilloneur aérodynamique (Swirler) (11) disposé en fond de chambre dont la fonction est de compléter la pulvérisation du gicleur par cisaillement aérodynamique et d'assurer un pré-mélange air/fluide avant de l'éjecter à l'air libre, dans le souffle d'air (13).

6. Dispositif, selon les revendications 1 et 5 ou 2 et 5, **caractérisé par le fait que** le pré-mélange s'éjecte après un venturi (16) qui débouche à l'air libre dans le souffle d'air.

7. Dispositif, selon la revendication 6, seule ou en combinaison avec l'une des autres revendications précédentes, **caractérisé par le fait qu'**il comprend deux conduits annulaires à fentes orientées (14,15) recevant l'air secondaire, l'un faisant tourner une partie de cet air dans un sens, autour du fluide pulvérisé, l'autre faisant tourner le reste de l'air dans l'autre sens autour du venturi (16).

8. Dispositif, selon l'une au moins des revendications précédentes, **caractérisé par le fait qu'**il comprend plusieurs cônes (12) d'éjection dans le flux d'air secondaire résiduel de plusieurs chambres de pré-mélange.

9. Dispositif, selon l'une au moins des revendications précédentes, **caractérisé par le fait qu'**il comprend plusieurs buses de piquage de plusieurs chambres de pré-mélange disposées, dans le flux d'air secondaire, au droit et en sortie de veine (8), de telle sorte qu'elles ne gênent pas l'éjection du flux secondaire résiduel, qui peut représenter jusqu'à 80% du total du flux d'air secondaire, et qui constitue, une fois éjecté à l'air libre, le souffle d'air qui dilue et diffuse les gouttelettes du fluide diffusé.

10. Moteur comprenant une veine d'air secondaire autour d'une veine d'air primaire, **caractérisé en ce qu'**il comporte le dispositif de projection de fluide selon l'une au moins des revendications précédentes, où il constitue ledit générateur de flux d'air comprimé de haut débit à la veine d'air secondaire (5) auquel est/sont raccordée(s) la/les buse(s) (8) de piquage d'air comprimé.

11. Moteur selon la revendication 10, **caractérisé par le fait qu'**il s'agit d'un réacteur double flux.

12. Réacteur double flux définissant un générateur de flux d'air et comprenant un dispositif selon l'une au moins des revendications 1 à 9.

13. Procédé pour projeter un fluide, dans lequel on mélange ce fluide avec de l'air comprimé, avant de diffuser le mélange par l'effet du souffle d'air créé, **caractérisé en ce que** :
- on crée le souffle d'air par un réacteur double flux alimenté par de l'air ambiant (6) et comprenant une veine (5) d'air secondaire comprimé située autour d'un corps central (2) alimenté en air comprimé primaire et une soufflante (1) entrainée par un moteur ou un turbomoteur (17) intégré dans ledit corps central,
- on pique dans ladite veine d'air secondaire (5) de l'air comprimé pour alimenter une ou plusieurs chambres de pré-mélange (7) alimentée(s) en outre avec ledit fluide à projeter (9) de manière à pulvériser ce fluide avec l'air comprimé piqué, avant de diffuser ledit mélange à l'extérieur.

14. Procédé selon la revendication 13, **caractérisé par le fait qu'**on pique l'air comprimé dans ladite veine d'air secondaire (5) et on alimente en fluide à projeter (9) en disposant la ou les dites chambres de pré-mélange (7) en satellites autour d'un carénage (4) renfermant la veine (5) d'air secondaire.

## Claims

1. Device for spraying a fluid using an air blast effect, arranged on a high-throughput compressed air flow generator, supplied with ambient air (6) and comprising:
- a fan (1) driven by an engine or a turboshaft engine (17) integrated into a central body (2) supplied with primary compressed air,
- fixed or mobile flow straighteners (3) placed downstream of the fan,
- a fairing (4) creating an aerodynamic secondary compressed air duct (5) around the central body (2),
- one or several pre-mixing chambers (7) receiving the fluid to be sprayed, via a supply (9) of fluid, atomizing and pre-mixing this fluid before diffusing it through cones (12) using the air blast effect,
- at least one nozzle (8) for tapping compressed air and which is connected to the secondary air duct (5), **characterized in that** it further comprises several satellites each enclosing one said pre-mixing chamber (7) and arranged around the fairing (4) of the secondary air duct (5).

2. Device, according to Claim 1, **characterized in that** the supply (9) of fluid to be sprayed is connected to a source (21) of a fluid intended for civil defence, for protection or decontamination of the environment, or for agriculture.

3. Device, according to Claim 1 or 2, **characterized in that** the device for spraying a fluid and the air flow generator are designed and dimensioned in such a way that the secondary compressed air flow, created in the aerodynamic duct (5) by the rotation of the fan, is at an increased pressure in relation to the outside ambient air by at least 15% in nominal operation.

4. Device, according to Claims 1 and 3 or 2 and 3, **characterized in that** it comprises several nozzles for tapping air (8) which are arranged in the flow of the aerodynamic secondary compressed air duct (5), at the outlet of this duct, in such a way that the pre-mixing chamber or chambers (7) is/are supplied with secondary compressed air at a pressure that is at least greater by 15% than that of the ambient outside air.

5. Device, according to Claim 1 or 2, **characterized in that** each pre-mixing chamber (7) is provided with a conduit for supplying the fluid to be sprayed (9) of which the outlet orifice carries a jet nozzle (10), which exits into an aerodynamic swirler (11) arranged at the base of the chamber of which the function is to complete the atomizing of the jet nozzle by aerodynamic shearing and to provide an air/fluid pre-mixture before ejecting it into the open air, in the air blast (13) .

6. Device, according to Claims 1 and 5 or 2 and 5, **characterized in that** the pre-mixture is ejected after a venturi (16) which exits into the open air in the air blast.

7. Device, according to Claim 6, on its own or in combination with one of the other preceding claims, **characterized in that** it comprises two annular conduits with directed slots (14, 15) receiving the secondary air, one causing a portion of this air to rotate in one direction, around the atomized fluid, the other causing the rest of the air to rotate in the other direction around the venturi (16).

8. Device, according to at least one of the preceding claims, **characterized in that** it comprises several ejection cones (12) in the residual secondary air flow of several pre-mixing chambers.

9. Device, according to at least one of the preceding claims, **characterized in that** it comprises several nozzles for tapping several pre-mixing chambers arranged, in the secondary air flow, in line with and at the outlet of the duct (5), in such a way that they do not hinder the ejection of the residual secondary flow, which can represent up to 80% of the total of the secondary air flow, and which constitutes, once ejected into the open air, the air blast which dilutes and which diffuses the droplets of the diffused fluid.

10. Engine comprising a secondary air duct around a primary air duct, **characterized in that** it comprises the device for spraying a fluid according to at least one of the preceding claims, where it constitutes said high-throughput compressed air flow generator at the secondary air duct (5) to which device is/are connected the nozzle or nozzles (8) for tapping compressed air.

11. Engine according to Claim 10, **characterized in that** the engine is a turbofan engine.

12. Turbofan engine defining an air flow generator and comprising a device according to at least one of Claims 1 to 9.

13. Method for spraying a fluid, in which this fluid is mixed with compressed air, before diffusing the mixture by using the effect of the air blast created, **characterized in that**:
- the air blast is created by a turbofan engine supplied with ambient air (6) and comprising a secondary compressed air duct (5) located around a central body (2) supplied with primary compressed air and a fan (1) driven by an engine or a turboshaft engine (17) integrated into said central body,
- compressed air is tapped from said secondary air duct (5) in order to supply one or several pre-mixing chambers (7) further supplied with said fluid to be sprayed (9) in such a way as to atomize this fluid with the tapped compressed air, before diffusing said mixture to the exterior.

14. Method according to Claim 13, **characterized in that** the compressed air is tapped from said secondary air duct (5) and fluid to be sprayed (9) is supplied by arranging said pre-mixing chamber or chambers (7) as satellites around a fairing (4) enclosing the secondary air duct (5).

## Patentansprüche

1. Vorrichtung zur Fluideinspritzung durch Luftdruckstoßwirkung, die auf einem Druckluftstromgenerator mit hohem Durchsatz angeordnet ist, die mit Umgebungsluft (6) versorgt wird und enthält:
- ein Gebläse (1), das von einem in einen zentralen Körper (2) eingebauten Motor oder Turbomotor (17) angetrieben wird, der mit Primärdruckluft versorgt wird,
- ortsfeste oder bewegliche Strömungsrichter (3), die hinter dem Gebläse angeordnet sind,
- eine Verkleidung (4), die eine aerodynamische Strömung (5) von Sekundärdruckluft um den zentralen Körper (2) herum erzeugt,
- eine oder mehrere Vormischkammern (7), die das einzuspritzende Fluid über eine Fluidversorgung (9) empfangen, die dieses Fluid zerstäuben und vormischen, ehe es durch Trichter (12) durch Luftdruckstoßwirkung diffundiert wird,
- mindestens eine Druckluft-Abzweigdüse (8), die mit dem Sekundärluftkanal (5) verbunden ist,
**dadurch gekennzeichnet, dass** sie außerdem mehrere Satelliten enthält, die je eine Vormischkammer (7) umschließen und um die Verkleidung (4) des Sekundärluftkanals (5) herum angeordnet sind.

2. Vorrichtung nach Anspruch 1, **dadurch gekennzeichnet, dass** die Versorgung (9) mit einzuspritzendem Fluid mit einer Quelle (21) eines für den Zivilschutz, den Schutz oder die Dekontaminierung der Umgebung oder für die Landwirtschaft bestimmten Fluids verbunden ist.

3. Vorrichtung nach Anspruch 1 oder 2, **dadurch gekennzeichnet, dass** die Fluideinspritzvorrichtung und der Luftstromgenerator so gestaltet und bemessen sind, dass der in dem aerodynamischen Kanal (5) durch Drehung des Gebläses erzeugte Sekundärdruckluftstrom im Normalbetrieb bezüglich der Außenumgebungsluft mindestens 15% Überdruck hat.

4. Vorrichtung nach den Ansprüchen 1 und 3 oder 2 und 3, **dadurch gekennzeichnet, dass** sie mehrere Luftabzweigdüsen (8) enthält, die im Strom des aerodynamischen Kanals (5) von Sekundärdruckluft am Ausgang dieses Kanals angeordnet sind, so dass die Vormischkammer(n) (7) mit Sekundärdruckluft auf einem Druck mindestens 15% höher als derjenige der Außenumgebungsluft versorgt wird(werden).

5. Vorrichtung nach Anspruch 1 oder 2, **dadurch gekennzeichnet, dass** jede Vormischkammer (7) mit einem Versorgungskanal des einzuspritzenden Fluids (9) ausgestattet ist, dessen Entleerungsöffnung eine Spritzdüse (10) trägt, die in einen am Kammerboden angeordnet aerodynamischen Verwirbler (Swirler) (11) mündet, dessen Funktion es ist, die Zerstäubung der Spritzdüse durch aerodynamisches Abscheren zu vervollständigen und eine Luft/Fluid-Vormischung zu gewährleisten, ehe sie in die freie Luft in dem Luftdruckstoß (13) ausgestoßen wird.

6. Vorrichtung nach den Ansprüchen 1 und 5 oder 2 und 5, **dadurch gekennzeichnet, dass** die Vormischung nach einem Venturirohr (16) ausgestoßen wird, das in die freie Luft in dem Luftdruckstoß mündet.

7. Vorrichtung nach Anspruch 6 alleine oder in Kombination mit einem der anderen vorhergehenden Ansprüche, **dadurch gekennzeichnet, dass** sie zwei ringförmige Kanäle mit ausgerichteten Schlitzen (14, 15) enthält, die die Sekundärluft empfangen, wobei einer einen Teil dieser Luft in einer Richtung um das zerstäubte Fluid dreht und der andere den Rest der Luft in der entgegengesetzten Richtung um das Venturirohr (16) dreht .

8. Vorrichtung nach mindestens einem der vorhergehenden Ansprüche, **dadurch gekennzeichnet, dass** sie mehrerer Ausstoßtrichter (12) in den Restsekundärluftstrom von mehreren Vormischkammern enthält.

9. Vorrichtung nach mindestens einem der vorhergehenden Ansprüche, **dadurch gekennzeichnet, dass** sie mehrere Abzweigdüsen von mehreren Vormischkammern enthält, die im Sekundärluftstrom vor und am Ausgang des Kanals (5) so angeordnet sind, dass sie den Ausstoß des Restsekundärstroms nicht behindern, der bis zu 80% des Gesamtsekundärluftstroms darstellen kann und der, wenn er in die Außenluft ausgestoßen ist, den Luftdruckstoß bildet, der die Tröpfchen des diffundierten Fluids verdünnt und diffundiert.

10. Motor, der einen Sekundärluftkanal um einen Primärluftkanal herum umfasst, **dadurch gekennzeichnet, dass** er die Fluideinspritzvorrichtung nach mindestens einem der vorhergehenden Ansprüche aufweist, wobei er den Druckluftstromgenerator mit hohem Durchsatz an dem Sekundärluftkanal (5) bildet, mit dem die Druckluft-Abzweigdüse(n) (8) verbunden ist (sind).

11. Motor nach Anspruch 10, **dadurch gekennzeichnet, dass** es sich um einen Doppelstromreaktor handelt.

12. Doppelstromreaktor, der einen Luftstromgenerator definiert und eine Vorrichtung nach mindestens einem der Ansprüche 1 bis 9 umfasst.

13. Verfahren zum Einspritzen eines Fluids, bei dem dieses Fluid mit Druckluft vermischt wird, ehe die Mischung durch die Wirkung des erzeugten Luftdruckstoßes diffundiert wird, **dadurch gekennzeichnet, dass**:
- der Luftdruckstoß durch einen Doppelstromreaktor erzeugt wird, der mit Umgebungsluft (6) versorgt wird und einen Sekundärdruckluftkanal (5), der um einen mit Primärdruckluft versorgten zentralen Körper (2) herum angeordnet ist, und ein Gebläse (1) umfasst, das von einem in den zentralen Körper eingebauten Motor oder Turbomotor (17) angetrieben wird,
- in dem Sekundärluftkanal (5) Druckluft abgezweigt wird, um eine oder mehrere Vormischkammern (7) zu versorgen, die außerdem mit dem einzuspritzenden Fluid (9) versorgt wird(werden), um dieses Fluid mit der abgezweigten Druckluft zu zerstäuben, ehe die Mischung nach außen diffundiert wird.

14. Verfahren nach Anspruch 13, **dadurch gekennzeichnet, dass** die Druckluft in dem Sekundärluftkanal (5) abgezweigt wird, und mit einzuspritzendem Fluid (9) versorgt wird, indem die Vormischkammer(n) (7) als Satelliten um eine Verkleidung (4) angeordnet werden, die den Sekundärluftkanal (5) umschließt.
